Europäisches Patentamt

European Patent Office

Office européen des brevets

(19)

(11) **EP 0 595 286 B1**

(12) **EUROPEAN PATENT SPECIFICATION**

(45) Date of publication and mention
of the grant of the patent:
**06.05.1999  Bulletin 1999/18**

(51) Int Cl.[6]: **C08G 18/40**, C08G 18/60,
C08G 18/65, C09D 175/00

(21) Application number: **93117390.0**

(22) Date of filing: **27.10.1993**

(54) **Organic solvent dispersible polyamide modified resins for use in coating compositions**

In organischen Lösungsmitteln dispergierbare mittels Polyamiden modifizierte Harze zur Verwendung in Beschichtungszusammensetzungen

Résines modifiées par des polyamides dispersables dans des solvants organiques utiliseés dans des compositions de revêtement

(84) Designated Contracting States:
**BE DE ES FR GB IT NL SE**

(30) Priority: **30.10.1992  US 969500**

(43) Date of publication of application:
**04.05.1994  Bulletin 1994/18**

(73) Proprietor: **BASF CORPORATION**
**Parsippany, NJ 07054 (US)**

(72) Inventors:
• **Menovcik, Gregory G.**
**Farmington Hills, Michigan 48334 (US)**

• **DePue, Jeffrey S.**
**Canton, Michigan 48187 (US)**

(74) Representative: **Münch, Volker, Dr.**
**Dres. Fitzner & Münch**
**Rechts- und Patentanwälte**
**Lintorfer Strasse 10**
**40878 Ratingen (DE)**

(56) References cited:
**FR-A- 1 402 576          GB-A- 779 247**
**GB-A- 1 452 073**

Printed by Jouve, 75001 PARIS (FR)

## Description

<u>Field of the Invention</u>

The present invention pertains to the field of polyamide modified polaurethane resins for use in coating compositions.

<u>Background of the Invention</u>

The use of polyurethane, polyester-polycarbonate and acrylic resins in coating compositions is well known. These resins are widely used for both basecoat and clearcoat coating compositions. There is however, ongoing research to develop resins and coatings with improved performance characteristics. One area of performance concerns the resistance of a cured coating to stone chipping and resistance.

The damage caused by chipping and impact is particularly problematic in the area of vehicle coatings. The availability of a resin and coating that provides improved chip and impact resistance provides important advance in the art. Costly repairs to coatings damaged from stone chipping and other impacts could be greatly reduced, and the life of a coated article pronologed.

The document GB 1452073 discloses solvent borne polyamid modified polyurethan resins for the preparation of coating compositios comprising a linear polyamid, a linear polyester diol and a diisocyanat. This document, however, relates to fabrics and the like.

It is unexpected that polyamide modified polyurethane resins would be useful in a solvent borne coating composition, because the polyamides themeselves are highly viscous and generally have low solubility in most solvents. The coating containing the polyamide modified polyurethane resins, however, exhibits a high degree of transparency and provides a high quality basecoat and clearcaot.

This invention, therefore, relates to the discovery that polyamide modified polyurethane resins and coating compositions prepared therefrom demonstrate a high degree of resistance to stone chipping and damage caused by both direct and reverse impact. These coating compositions exhibit coating characteristics superior to those taught by the art and are especially useful as clearcoats and basecoats for automobiles.

<u>Summary of the Invention</u>

The polyamide modified polyurethane resins of the present invention are formed by reacting a polyamide with a diisocyanate functional monomer and one or more prepolymers having at least two reactive hydrogens.

The polyamide macromonomer is formed first by reacting an organic compound having two reactive hydrogens, such as aromatic, aliphatic or cycloaliphatic anhydrides or diacid halide, with an amine containing compound such as a diamine, amino alcohol, amino thiol or mixture of these. The resultant polyamide macromonomer is a low molecular weight macromonomer having a molecular weight ranging from about 200 to about 2000. The polyamide macromonomer comprises from about 6.0 percent to about 25.0 percent of the total resin composition weight.

The polyamide and prepolymer are reacted in the presence of diisocyanate functional monomer, to provide chain extension. The prepolymer or prepolymer mixture can be a polyol or an aromatic or aliphatic diol or triol. The total prepolymer comprises from about 30 percent to about 50 percent of the total resin composition weight. The diisocyanate is an aliphatic diisocyanate compound such as isophorone diisocyanate, 1,6-hexamethylene diisocyanate, 1,4-butylene diisocyanate, methylene bis(4-cyclohexyl) isocyanate and 2,4 toluene diisocyanate. Excess diisocyanate is utilized to provide an intermediate urethane resin having free isocyanate groups at the ends. The diisocyanate functional monomer is present in an amount between 25 and 40 percent by weight based on total resin weight. The NCO content of the resultant polymer is from about 0.24 to about 0.30 meq of isocyanate per gram of polymer.

The molecular weight of the resins range from about 25,000 to about 50,000, and preferanbly from 35,000 to 45,000.

The amid modified resins of the present invention are utilized in coating compositions for solvent based coatings and are more fully described herein below.

## Detailed Description of the Invention

The polyamide modified polyurethane resins and coating compositions of the present invention are formulated to provide improved resistance to stone chipping and improved resistance to both direct and reverse impact.

The invention is related to the use of a polyurethan resins in solvent-borne automotive coating composition wherein the polyurethan resin comprises the reaction product of a) polyamid having a molecular weight ranging from 200 to 2.000 obtained by reacting i)an organic compound selected from the group consisting of aromatic, aliphatic,

and cycloaliphatic anhydrides, diacid halides and mixtures thereof with ii) an amine containing compound selected from the group consisting of diamines, amino alcohols, amino thiols and mixtures thereof, in a molar ratio of 1:1 to 1: 2, b) polyol and c) diisocyanate functional monomer, wherein 6 to 25 per cent by weight based on total resins weight polyamid, 30 to 50 per cent by weight based on total resins weight polyol and 20 to 40 per cent by weight based on total resin weight diisocyanate functional monomer are used. The invention is further directed to a solvent borne automotive coating composition comprising the said polyamid modified polyurethan resins. As far as the term "prepolymere" is used in the following specification the term "polyol" is meant.

The polyamid modified polyurethan resins are formulated by first prepating a polyamid monomer. This monomer is then combined with one or more prepolymers, followed by the addition of diisocyanate to afford the polyamid-modified polyurethan polymere.

Compound (i) is preferably a cycloaliphatic anhydride such as 1,2-cyclohexane dicarboxylic anhydride, phthalic anhydride or succinic anhydride, or a diacid halide such as terephthaloyl chloride, succinyl chloride. The amine containing compound is preferably an amino alcohol such as ethanolamine, propanol amine or 2-amino-2-methyl-1-propanol, an amino thiol such as 2-amino ethanethiol, or a diamine such as 1,4-diaminocyclohexane, 1,6-hexanediamine,

The polyamides have a molecular weight ranging from 200-2,000. Lower weight polymides having a molecular weight of 200-300 are synthesized as follows. One mole of the cyclic anhydride as described above, is dissolved in a suitable, low boiling point aromatic solvent such as toluene, xylene or benzene. The anhydride is then reacted with two molar equivalents of an amino alcohol as described above. The reaction exotherms from room temperature to 80+°C. The mixture is then heated to between about 100°C and about 140°C liberating water, which is collected and weighed. When the calculated amount of water is collected and removed, the reaction mixture is cooled and the diol terminated polyamide product is collected. The resulting polyamide macromonomer typically has a molecular weight of between about 200 and about 300.

To increase the molecular weight of the polyamides to between 300 and 2,000 the diamine is treated with two molar equivalents of a cyclic anhydride in a suitable solvent and heated, if necessary, to between 100° and 130°C until an acid number of between 3.0 and 4.0 is obtained. This is generally for a period of between 18 and 20 hours. This intermediate is then treated with two molar equivalents of an amino alcohol and heated to between 120°C and 140°C. When the calculated amount of water is collected and discarded, the reaction mixture is cooled to room temperature to afford the diol terminated polyamide.

Diamine terminated polyamides are obtained by substituting diamine for the amino alcohol. Di-thiol terminated polyamides are obtained by substituting a thiol amine for the amino alcohol.

An alternative method for forming a diol or amine terminated polyamide utilizes diacid chloride and diamine or amino alcohol. One mole of the diacid chloride is dissolved in a suitable solvent such as methylene chloride, chloroform or 1,2-dichloroethane, and is then treated with two molar equivalents of an amino alcohol and two molar equivalents of a tertiary amine base which neutralizes the hydrochloric acid produced during the course of the reaction. The resultant mixture is allowed to react to afford the diol or amine terminated polyamide. The crude reaction mixture is then titrated with a stoichiometric amount of sodium bicarbonate. The resulting polyamide has a molecular weight of between 200 and 400.

Higher molecular weight diol or amine terminated polyamides, having a molecular weight in the range of 400 to 2000, are prepared by first treating a diamine with two molar equivalents of a diacid chloride in the presence of two molar equivalents of a tertiary amine base. A diacid chloride terminated polyamide intermediate is formed. This intermediate is then treated with two molar equivalents of an amino alcohol or diamine in the presence of two molar equivalents of a tertiary amine base. The reaction mixture is treated with sodium bicarbonate and filtered as described above.

To produce the polyamide modified polyurethane of the present invention, the polyamide macromonomer is then combined with the one or more prepolymers and excess diisocyanate functional monomer. The prepolymer serves as a chain extender as it includes compounds having hydroxyl groups that react with the isocyanate groups to form urethane linkages and to build up the polyurethane backbone. The prepolymer compounds include polyols such as polyester polyol, polycarbonate polyol, acrylic resins, trimethylolpropane and aromatic and aliphatic diols and triols such as 1,6 hexane diol, neopentyl glycol, bisphenol A, cyclohexanedimethylol, 1,4-butanediol, hexanetriol, pentaerythritol and mixtures thereof.

The prepolymer compounds such as polyester polyols are formed by reacting a compound having at least two carboxylic acid functionalities with at least two alcohol functionalities. The carboxylic acid component of the polyester may be comprised of long chain dicarboxylic acids, short chain dicarboxylic acids, mixtures thereof or carboxylic acid equivalents such as anhydrides, lactones, and polycarbonates, among others. Long chain monocarboxylic acids may also be used, but these are generally employed to chain terminate the polyester resin.

The shorter chain carboxylic acid component, if used, may be comprised of mono-, di-, or higher functionality carboxylic acids, or a mixture of these carboxylic acids having carbon chains of 18 or fewer carbon atoms. Monocarboxylic acids function to terminate a polyester chain and are chosen for that purpose. It is preferable that the short chain carboxylic acid component be a dicarboxylic acid. Such preferred dicarboxylic acid compounds include, for example adipic, azeleic, and other aliphatic dicarboxylic acids. Also suitable are aromatic dicarboxylic acids. Especially preferred is isophthalic acid. Alkylene and aralkylene carboxylic acids may also be employed.

The polyester polyols are synthesized from one or more of the above-described carboxylic acid components and an excess of a polyol component. An excess of polyol is used so that the polyester resin preferably contains terminal hydroxyl groups. The polyol compounds preferably have an average hydroxy functionality of at least 2. The polyester polyol is comprised of one or more polyols, preferably a diol. Up to about 25 percent by weight of the polyol component may be a polyol having three or more hydroxy groups per molecule. Where polyols having three or more hydroxy groups are chosen, the result is a branched polyester.

While it is not always desirable to have a triol or higher multi-functional alcohol present because of the tendency to form a branched chain polyester, some branching may be desirable, especially in the case where the polyester is to be incorporated into a branched polyurethane. There may also be a small amount of monoalcohol in the polyol component, particularly if larger proportions of higher functional alcohols are used. These alcohols serve as chain terminators.

The diols usually employed in making the polyester prepolymers include alkylene glycols, such as ethylene glycol, propylene glycol, butylene glycol, neopentyl glycol, and 1,6-hexanediol and other glycols such as hydrogenated bisphenol A, cyclohexane dimethanol, caprolactone diol (i.e. the reaction product of caprolactone and ethylene glycol), hydroxylated bisphenols, and the like. However, other diols of various types and, as indicated polyols of higher functionality may also be utilized. Such higher functional alcohols can include for example, trimethylolpropane, trimethylolethane, pentaerythritol, and the like, as well as higher molecular weight polyols.

The low molecular weight diols which are preferred in the invention have hydroxy values of 200 or above, usually within the range of about 1500 to 2000. Such materials include aliphatic diols, particularly alkylene polyols containing from 2 to 18 carbon atoms. Examples include ethylene glycol, 1,4-butanediol, cycloaliphatic diols such as 1,2-cyclohexanediol and cyclohexane dimethanol. An especially preferred diol is 1,6-hexanediol.

The polyester prepolymers are prepared as set forth in Examples 1-3. However, any suitable method of preparation may be employed. Generally, the reaction is conducted at a temperature of between about 200°C and 230°C, and preferably between 210°C and 220°C. The reaction time ranges from about 15 hours to about 30 hours. Preferably reaction time is between 18 hours and 25 hours. The polyester prepolymers have a solids content ranging from 70 to 90 percent, and preferably between 75 and 85 percent.

The polycarbonate prepolymers are prepared from diethyl carbonate and an excess of a polyol component. An excess of polyol is used so that the polycarbonate is hydroxy terminated. The diethyl carbonate is present in an amount of between 20 and 40 percent by weight. The polyol component is as described above for the polyester prepolymer. The polyol or mixture thereof is present in an amount between about 50 and 80 percent by weight. A catalyst such as an organic titanate is also utilized. A preferred catalyst is tetraisopropyl titanate, sold under the trademark TYZOR, and available from DuPont.

The polycarbonate polyols are prepared as set forth in the trademark TYZOR, and avaible from DuPont.

The polycarbonate polyols are prepared as set forth in Examples 4 and 5. However, any suitable method of preparation may be employed. Generally, the reaction is conducted at a temperature of between 120°C and 140°C and preferably between 120°C and 130°C. The reaction time ranges between about 1 hour and about 2 hours. Preferably reaction time is between 1 and 1.5 hours. The resulting polycarbonate has a molecular weight range of 1100 to 1900 with a melting point range of 35°C to 70°C.

Suitable acrylic prepolymers are prepared by reacting an ethylenically unsaturated monomer containing an isocyanate group and an ethylenically unsaturated monomer containing no functional groups capable of reacting with the isocyanate. Alternative suitable monomers containing an isocyante group include 4-isopropylphenyl isocyanate. Prefered are 4-isopropylphenyl and m-tetramethylxylene isocyanate.

Suitable ethylenically unsaturated monomers having no functionality to react with the isocyanate include vinyl aromatics such as styrene, alpha-methyl styrene, vinyl toluene, tert-butyl styrene and acrylic or methacrylic alkyl esters derived from alcohols having 1 to 20 carbon atoms including methyl acrylate, ethyl acrylate,propyl acrylate, n-buty acrylate isobutyl acrylate, and tert-butyl acrylates, ethyl hexyl acrylate and the corresponding methacrylates. Examples of other suitable monomers include acrylic and methacrylic acid. Also useful are hydroxy substituted acrylic or methacrylic alkyl esters derived from alcohols having 1 to 20 carbon atoms. Examples include hydroxy methyl acrylate, hydroxy ethyl acrylate, hydroxy propyl acrylate,hydroxy n-butyl acrylate, hydroxy isobutyl acrylate, and hydroxy tert-butyl acrylates and the corresponding methacrylates.

The acrylic resins are prepared according to the method set forth in Example 6.

Formulations for specific prepolymers are set forth in the Examples following the detailed description.

To produce the polyamide-modified polyurethane resins which are useful in basecoat compositions of the present invention, the above-described polyamide macromonomer and prepolymer(s) are reacted with an excess of diisocyanate functional monomer to produce an intermediate resin having free isocyanate groups at the ends. The diisocyanate functional monomer is an aliphatic diisocyanate compound such as isophorone diisocyanate, 1,6-hexamethylene diisocyanate, 1,4-butylene diisocyanate, methylene bis (4-cyclohexyl isocyanate and 2,4 toluene diisocyanate and mixtures thereof.

The resin of the present invention utilizes the polyamide macromonomer in an amount between 6 to 25 percent by weight, and preferably between 10 and 22 percent by weight based on total resin weight. The prepolymer is present in an amount between 30 to 50 percent by weight, and preferably between 40 and 48 percent by weight based on total resin weight. The diisocyanate functional monomer is utilized in an amount between 25 and 40 percent by weight, and preferably between 32 and 37 percent by weight, based on total resin weight.

The polyamide modified polyurethane is prepared by the following reaction. The polyamide macromonomer is mixed with one or more of the prepolymers, diisocyanate and low molecular weight ketone solvent such as methyl ethyl ketone, methyl isobutyl ketone, methyl amyl ketone and methyl propyl ketone. The reaction is conducted at a temperature of between about 90°C and 160°C, and preferably between 105°C and 120°C. The reaction time ranges from about 2 hours to about 6 hours. Preferably reaction time is between 1.5 hours and 4 hours.

The resin has a non-volatile content ranging from about 60 percent to about 95 percent, and preferably from 60 percent to 85 percent. The NCO content of the polyurethane polymer is from about 0.19 to about 0.38 meq of isocyanate per gram of polymer and preferably from 0.24 to 0.30 meq per gram of polymer.

If any isocyanate functionality provided by the diisocyanate functional monomer remains after reaction with polyamide macromonomer and prepolymer, it may be capped with a trifunctional monomer to increase the molecular weight and the hydroxyl density of the resin. Suitable monomers for this purpose include amino alcohols such as ethanolamine and diethanolamine, since the amino groups preferentially react with the isocyanate groups present. Multi-functional alcohols such as trimethylolpropane and ethylene glycol can also be used for this purpose. The increase in hydroxyl density is used for crosslinking with a melamine or an isocyanate crosslinker during the film forming process. The capping ratio of OH/NCO is typically 3:1, and may be as low as 2:1, so that limited branching occurs and the optimal amount of hydroxyl density is present for crosslinking.

The polyamide modified polyurethane resin is formulated into a basecoat or clearcoat composition by mixing the resin with a suitable crosslinking agent. The crosslinking agents may include monomeric or polymeric aminoplasts or polyisocyanates. Aminoplast resins are aldehyde condensation products of melamine, urea and similar compounds. Suitable crosslinkers include products obtained from the reaction of formaldehyde with melamine, urea, or benzoguanamine. Also useful are the condensation products of other amines and amides, for example, aldehyde condensates of triazines, diazines, triazoles, guanidines, guanamines, and alkyl and aryl substituted derivatives of such compounds, including alkyl and aryl substituted ureas and alkyl and aryl substituted melamines. Some examples of such compounds are N,N'-dimethylurea, benzourea, dicyandiamide, formoguanamine, acetoguanamine, ammeline, 2-chloro-4,6-diamino-1,3,5-triazine, 6-methyl-2,4-diamino,1,3,5-triazine, 3-5-diamino-triazole, triaminopyrimidine, 2-mercapto-4,6-diaminopyrmidine and 2,4,6-triethyl triamino-1,3,5 triazine. Preferably, melamine and alkylated amino resins are used as the crosslinker in compositions of the present invention. The melamine and alkylated amino resins are utilized in an amount between 25 and 35 percent by weight, based on total weight of the amide-modified polyurethane resin.

Examples of suitable isocyanate crosslinkers include isophorone diisocyanate, 1,6-hexamethylene diisocyanate, 1,4-butylene diisocyanate, methylene bis(4-cyclohexyl) isocyanate aned 2,4-toluene diisocynate and mixtures thereof.

The resulting polyamide modified polyurethane resin may be dispersed in an organic solvent such as butyl cellosolve, xylene, N-butyl acetate, butyl alcohol, carbitol and N-propyl acetate.

The polymeric resins of the present invention are formulated along with additional components into solvent-borne basecoat and clearcoat compositions which are sprayed or electrostatically deposited onto metal or plastic substrates, for example automobile bodies. These additional components include rheology control agents, pigments, various fillers, surfactants, plasticizers, wetting agents, defoamers, adhesion promoters and catalysts. Other components of the coating composition may include conditioning agents, thickeners, antioxidants, leveling agents and mixtures.

In general, the polyamide modified polymeric resin is mixed with an aminoplast resin, a melamine or other crosslinking agent, a grind resin, a portion of an organic solvent, pigments and a rheology control agent. Other agents as listed above may also be included.

As indicated the solvent-borne polyamide modified polymeric resin is utilized as the principal or major vehicle resin. Generally, the principal or major vehicle resin comprises between about 50 and 90% by weight of the total solids present in the basecoat or clearcoat composition. Acceptable polyamide-modified polyurethane resins are described in Examples 7-11 following the detailed description.

A grind resin may also be used in the basecoat compositions of the present invention. The grind resin may be comprised of a number of polyurethane resins, which may be the same as or different from the principal or major vehicle resin in chemical character. The grind resin may range between about 2 and about 25% by weight of the total solids in the coating composition and preferably comprises about 5-40% by weight of the basecoat composition.

Pigments may be incorporated into the basecoat compositon to provide the desired cosmetic characteristics.

This is done by mixing pigments with the above-described grind resin, and in addition, optionally, aminoplast resin to form a pigment paste.

The final pigment paste comprises about 3% to about 65% by weight of a pigment and about 5% to about 65% by weight for a grind resin, and optionally, up to 50% by weight of a cross-linking agent.

Any standard pigment known in the art may be used with resins of the present invention so long as these pigments can be formulated without affecting the desired characteristics of the resins. Specific examples of dye stuffs or pigments may be inorganic or organic, for example graphite, carbon black, zinc chromate, strontium chromate, barium chromate, lead chromate, lead cyamide, titanium dioxide, zinc oxide, cadmium sulfide, iron oxide, aluminum flakes, zinc sulfide, phthalo cyanine complexes, naphthol red, quinacridones and halogenated thioindigo pigments, among others.

Metallic flake pigments such as aluminum flake and silver may be used alone or in mixture with non-metallic pigments.

The resinous dispersions of basecoat or clearcoat are dispersed in organic solvents such as butyl cellosolve, xylene, N-butyl acetate, butyl alcohol, carbitiol, and N-propyl acetate.

The basecoat compositions of the present invention are applied in one or more coats, to a substrate which can be metallic, plastic, ceramic, wood, paper, etc. The coating is particularly useful for coating an automobile body. The coating may be sprayed or electrostatically deposited onto the substrate.

After being deposited, the substrate may be flash dried at a temperature sufficient to remove a portion of the solvent, but below that sufficient to cure the applied coating, typically temperatures within the range of from room temperature to about 145°F (63°C). After the first basecoat is deposited, a second basecoat and subsequent layer of basecoat, if needed or desired, can be deposited over the first either with or without flash drying. One or more clear, transparent top coat layers are then subsequently applied over the last base coat layer. Any known unpigmented or transparently pigmented coating agent is, in principle, suitable for use as the top coat material.

After the clear coat is applied over the base coat layer(s), the multi-layer coating is then baked to cross-link and cure the polymeric materials and to drive the small amount of residual water and/or solvent from the coating layer (s). This baking step generally involves the heating of the coated substrate for periods of from about 10 to about 60 minutes and temperatures ranging between about 150°F (66°C) and 300°F (149°C). The baking step cures the multi-layer coating to a hard, durable film.

The invention will be further described in connection with several examples that follow. These examples are shown by way of illustration of the invention and are not meant to limit the scope of the invention. All parts and percentages in the examples are by weight unless otherwise indicated.

## EXAMPLES

## EXAMPLE 1

**Linear Polyester Diol Intermediate**

The following monomers were weighed and charged to a three neck round bottom flask. The reactor was set up to go through a packed column equipped with a moisture trap. The trap was initially filled with xylene.

| RAW MATERIAL | WT % |
|---|---|
| Dimer fatty acid | 53.73 |
| Isophthalic acid | 15.45 |
| 1,6 Hexane diol | 28.64 |
| Xylene | 2.18 |
| | 100.00 |

The mixture was blanketed with nitrogen and the reaction temperature increased slowly until a temperature of 215°C was reached. The reaction was held at this temperature until an acid number of 3.5-4.0 was reached (from 18-25 hours). Once the temperature of 215°C was reached xylene was stopped from returning to the reactor. When the reaction reached an acid number of 4.00-3.50, the reaction was cooled to 150°C. When the temperature of 150°C was reached, vacuum was slowly applied to strip the remaining xylene. Vacuum was increased until 26-28 inches of vacuum was achieved. This vacuum was held until all of the solvent was removed. Then, vacuum was broken and the reaction cooled to 120°C. When the temperature reached 120°C, solids were adjusted with 82% methylpropylketone.

**Example 2**

**Polyester Intermediate with Dimer Fatty Acid**

The following monomers were weighed and charged to a three neck round bottom flask. The reactor was set up to go through a packed column equipped with a moisture trap. The trap was initially filled with toluene.

| RAW MATERIAL | WT % |
|---|---|
| Dimer fatty acid | 30.294 |
| Adipic acid | 30.294 |
| 1,6 Hexane diol | 37.203 |
| Toluene | 2.208 |
| | 100.00 |

The mixture was blanketed with nitrogen and the reaction temperature increased slowly until a temperature of 215°C was reached. The reaction was held at this temperature until an acid number of 4.00-3.5 was reached. This reaction time ranged from 18 to 25 hours. Once the temperature of 215°C was reached toluene was stopped from returning to the reactor. When the reaction reached an acid number of 4.00-3.50, the reaction was cooled to 150°C. When the temperature of 150°C was reached, vacuum was slowly applied to strip the remaining toluene. Vacuum was increased until 26-28 inches of vacuum was achieved. This vacuum was held until all of the solvent was removed. Then, vacuum was broken and the reaction cooled to 120°C. When the temperature reached 120°C, solids were adjusted with 82% methylpropylketone.

**EXAMPLE 3**

**Non Diner Fatty Acid Polyester**

The following monomers were weighed and charged to a three neck round bottom flask. The reactor was set up to go through a packed column equipped with a moisture trap. The trap was initially filled with xylene.

| RAW MATERIAL | WT % |
|---|---|
| Heptanedioic acid | 27.426 |
| Adipic acid | 25.365 |
| 1,6 Hexane diol | 45.033 |
| Toluene | 2.160 |
| | 100.00 |

The mixture was blanketed with nitrogen and the reaction temperature increased slowly until a temperature of 215°C was reached. The reaction was held at this temperature until an acid number of 3.5-4.0 was reached, about 18-25 hours. Once the temperature of 215°C was reached toluene was stopped from returning to the reactor. When the reaction reached an acid number of 4.00-3.50, the reaction was cooled to 150°C. When the temperature of 150°C was reached, vacuum was slowly applied to strip the remaining toluene. Vacuum was increased until 26-28 inches of vacuum was achieved. This vacuum was held until all of the solvent was removed. Then, vacuum was broken and the reaction cooled to 120°C. When the temperature reached 120°C, solids were adjusted with 82% methylpropylketone.

**EXAMPLE 4**

**Polycarbonate Diol of 1,6 Hexane Diol and Neopentyl Glycol**

The following monomers were weighed and charged to a three neck round bottom flask.

| 1,6-hexane diol | 2.57 moles |
|---|---|
| neopentyl glycol | 2.25 moles |
| diethyl carbonate | 4.72 moles |

The above ingredients were combined, by first forming a mixture of the diol and glycol and then adding the diethyl carbonate. To this mixture a catalyst (i.e. Lewis acid) was added to assist the reaction. The Lewis acid chosen was an organic titanate such as tetraisopropyl titanate (TYZOR From DuPont). The amount of catalysts were used based on the total weight of diol and carbonate used amounting to approximately 600 parts per million by weight. A small amount of xylene was used to dissolve the two diols so that the reaction would be a homogenous reaction instead of a two phase system.

The reaction mixture was heated slowly under nitrogen atmosphere until the temperature of 130°C was reached. At this point ethyl alcohol and xylene were distilled from the reaction. After the reaction was complete, (shown by no ethyl alcohol being distilled over), the reaction mixture was subjected to a vacuum strip to remove the last traces of ethyl alcohol.

The resulting polycarbonate diol was a waxy solid which ranged in molecular weight from 1100 to 1900 with a melting point ranging from 36°C to 48°C.

## EXAMPLE 5

### Polycarbonate Diol of Hydrogenated Bisphenol A and 1,6-hexane diol

The following ingredients were weighed and charged to a three neck round bottom flask.

| | |
|---|---|
| hydrogenated bisphenol A | 2.083 moles |
| 1,6-hexanediol | 2.083 moles |
| diethyl carbonate | 3.90 moles |

First a mixture of diols was formed and this mixture was then combined with the diethyl carbonate. An organic titanate catalyst, tetraisopropyl titanate from DuPont, was used to assist the reaction. The amount of catalyst used was based on the total weight of the diol and carbonate used in the reaction. This amounted to approximately 600 parts per million by weight. A small amount of xylene was used to dissolve the two diols so that the reaction would be homogenous instead of a two phase system.

The reaction mixture was heated slowly under a nitrogen atmosphere until the temperature of 130°C was reached. At this point ethyl alcohol and xylene were distilled from the reaction. (After the reaction reaches 130°C the total time to completion is between 60 and 90 minutes. After the reaction was complete, (i.e. no signs of ethyl alcohol being distilled over), the last traces of ethyl alcohol were removed by vacuum strip distillation.

The resulting polycarbonate diol was a waxy solid which ranged in molecular weight from 1200 to 1800 with a melting point ranging from 48°C to 67°C.

## EXAMPLE 6

### Acrylic Resin

The following ingredients were added to a three neck flask.

| | |
|---|---|
| Amide Diol | 217.39 g |
| Butyl Acetate | 250.00 g |

To this mixture was added via addition funnel
50 g 4-isopropylphenyl isocyanate.
These reactants were heated to 109°C for a period of 3 to 4 hours. The reaction mixture was then titrated to determine when the NCO content was 0 mg/g.

The reaction mixture was then cooled to 80°C and 62.73 grams m-tetramethyl xylene isocyanate (m-TMI®[1]) were added to the mixture. The reaction was heated to 109°C and heated for 3 hours. The reaction mixture was then titrated to determine when the NCO content was 0 mg/g.

Next, 500.00 g butyl acetate was added to the reaction mixture and heated to 118°C. The following reactants were added to the reaction mixture over a four hour period.

| | |
|---|---|
| Hydroxy ethyl acrylate | 358.00 g |
| Styrene | 85.10 g |

(continued)

| Acrylic acid | 18.50 g |
|---|---|
| Ethyl hexyl acrylate | 355.10 g |
| t-butyl peracetate | 89.10 g |

At the end of this time the reaction mixture was held for 1/2 hour.

To this mixture was added 54.5 g n-butanol and 9.54 g t-butyl peracetate. This addition was made over 1/2 hour. After this addition the reaction was held at 118°C for one hour. The reaction was then cooled.

[1]m-TMI® is m-tetramethyl xylene isocyanate, a vinyl monomer, available from American Cyanamid.

## EXAMPLE 7

### Preparation of Polyamide Modified Polyurethane Resin

The following monomers were weighed and introduced into a three neck round bottom flask:

| (i) isophorone diisocyanate (IPDI) | 267.6 g |
|---|---|
| (ii) neopentylglycol (NPG) | 73.0 g |
| (iii) trimethylolpropane (TMP) | 0.35g |
| (iv) a dihydroxy terminated polyamide (ave. MW = 500 g/mol) and | 83.8 g |
| (v) a dihydroxy terminated polyester (ave. MW =1400 g/mol) | 340.0 g |

To this mixture the following solvents were added: (i) methyl-iso-butyl ketone 110 g, (ii) methyl amyl ketone 34 g, and (iii) N-methylpyrrolidone 110 g. The mixture was formulated to produce a polyurethane with 0.26 milliequivalents of isocyanate functionality per gram of resin.

The mixture of the above ingredients was then heated to between 100°C and 120°C for approximately 3 hours. The reaction was complete when titration for isocyanate functionality indicated 0.26 meq of isocyanate fuctionality per gram of resin.

Next, 36.0 g trimethylolpropane was added to the reaction mixture. The resultant mixture was then heated to between 110°C to 120°C for 3 hours. Titration of isocyanate functionality indicated that no isocyanate was remaining. The mixture was cooled to 70°C and the following solvents were added: (i) xylene 300 g, (ii) methyl-iso-butyl ketone 100 g, and (iii) n-butyl acetate 300 g.

## EXAMPLE 8

### Polyamide modified Polyester Polyurethane Solution Resins

The following monomers were weighed into a three liter neck round bottom flask arranged for straight reflux reaction :

| isophorone diisocyanate | 201.4 g |
|---|---|
| neopentylglycol | 10.0 g |
| polyester diol (average mw =1420) | 510.0 g |
| amide diol (average mw =700.0) | 201.5 g |
| dimethylolpropionic acid | 16.4 g |
| methyl ethyl ketone | 200.0 g. |

reaction: The resin was formulated to produce a modified polyurethane with 0.24 milliequivalents of isocyanate functionality per gram of resin remaining for capping. After the addition of the above listed raw materials to the flask, the mixture was blanketed with nitrogen and heated to 110°C. The reaction mixture was held at this temperature for three hours before the first titration was made. The reaction was completed when there was only 0.24 meq. of isocyanate functionality per gram remaining. (This took about 4 hours.) After the target amount of isocyanate was reached, 38.66 grams trimethylolpropane (TMP) were added and allowed to react with the mixture for 2 hours to cap the reaction. The amount of TMP added was a ratio of 3:1 OH/NCO. A final NCO titration was taken to insure that all of the remaining isocyanate functionality was reacted. After there was no titratable isocyanate functionality remaining, the reaction mixture was cooled to 80°C and 30.56 grams n-butanol and 156.50 g butyl cellosolve were added to the mixture.

**EXAMPLE 9**

**Solution Linear Polyester-Polyamide Urethane Resin**

The following monomers were weighed into a three neck round bottom flask arranged for straight reflux reaction:

| | |
|---|---|
| Polyester diol (average mw = 1420) | 510.0 g |
| Amide diol (average mw = 700) | 201.5 g |
| Dimethylolpropionic acid | 16.4 g |
| Neopentyl glycol | 10.0 g |
| Isophorone diisocyanate | 201.4 g |
| Methyl ethyl ketone | 200.0 g |

After the addition of the above listed raw materials to the flask, the mixture was blanketed with nitrogen and heated to 110°C. The reaction mixture was held at this temperature for three hours before the first titration was made. The reaction was completed when there was only 0.24 meq. of isocyanate functionality per gram remaining. (This took about 4 hours). After the target amount of isocyanate was reached, 38.66 grams trimethylolpropane (TMP) were added and allowed to react with the mixture for 2 hours to cap the reaction. The amount of TMP added was a ratio of 3:1 OH/NCO. A final NCO titration was taken to insure that all of the remaining isocyanate functionality was reacted. After there was no titratable isocyanate functionality remaining, the reaction mixture was cooled to 80°C and 30.56 grams n-butanol and 156.50 g butyl cellosolve were added to the mixture.

**EXAMPLE 10**

**Branched Solution Polyamide-Modified Polyester Polycarbonate Urethane Resin**

The following monomers were weighed into a three neck round bottom flask arranged for straight reflux reaction:

| | |
|---|---|
| Polyester diol (average mw = 1420) | 306.0 g |
| Amide diol (average mw = 700) | 201.5 g |
| Polycarbonate diol | 115.0 g |
| Dimethylolpropionic acid | 16.4 g |
| Neopentyl glycol | 9.3 g |
| Isophorone diisocyanate | 201.4 g |
| Methyl ethyl ketone | 200.0 g |
| Trimethylolpropane | 3.8 g |

The resin was formulated to produce a modified polyurethane with 0.24 meq. of isocyanate functionality per gram of resin remaining for capping. After the addition of the above listed raw materials to the flask, the mixture was blanketed with nitrogen and heated to 110°C. The reaction mixture was held at this temperature for three hours before the first titration was made. The reaction was completed when there was only .24 meq. of isocyanate functionality per gram remaining. (This took about 4 hours.) After the target amount of isocyanate was reached, 36.42 grams trimethylolpropane (TMP) were added and allowed to react with the mixture for 2 hours to cap the reaction. The amount of TMP added was a ratio of 3:1 OH/NCO. A final NCO titration was taken to insure that all of the remaining isocyanate functionality was reacted. After there was no titratable isocyanate functionality remaining, the reaction mixture was cooled to 80°C and 30.56 grams n-butanol and 156.60 g butyl cellosolve were added to the mixture.

## EXAMPLE 11

### Linear Polyester Polycarbonate Polyamide Urethane Resins

The following monomers were weighed into a three neck round bottom flask arranged for straight reflux reaction:

| | |
|---|---|
| Polyester diol (average mw = 1420) | 418.0 g |
| Amide diol (average mw = 700) | 181.5 g |
| Polycarbonate diol | 115.0 g |
| Dimethylolpropionic acid | 16.4 g |
| Neopentyl glycol | 9.3 g |
| Isophorone diisocyanate | 201.4 g |
| Methyl ethyl ketone | 200.0 g |

The resin was formulated to produce a modified polyurethane with 0.24 meq. of isocyanate functionality per gram of resin remaining for capping. After the addition of the above listed raw materials to the flask, the mixture was blanketed with nitrogen and heated to 110°C. The reaction mixture was held at this temperature for three hours before the first titration was made. The reaction was completed when there was only 0.24 meq. of isocyanate functionality per gram remaining. (This took about 4 hours.) After the target amount of isocyanate was reached, 38.39 grams trimethylolpropane (TMP) were added and allowed to react with the mixture for 2 hours to cap the reaction. The amount of TMP added was a ratio of 3:1 OH/NCO. A final NCO titration was taken to insure that all of the remaining isocyanate functionality was reacted. After there was no titratable isocyanate functionality remaining, the reaction mixture was cooled to 80°C and 30.56 grams n-butanol and 156.60 g butyl cellosolve were added to the mixture.

## EXAMPLE 12

### Coating Composition

| INGREDIENT | PARTS BY WEIGHT |
|---|---|
| 3% Pluricol P-1010[1] and 3% Laponite RD[2] | 13.61 |
| Resimene 747 methylated melamine formadehyde resin[3] | 6.87 |
| Butyl cellosolve | 1.72 |
| Polyurethane Resin from example 11 | 27.87 |
| Carbon Black tint | 0.12 |
| White pigment paste | 39.67 |
| Fumed Silica (R-9972 from DeGussa)[4] | 7.97 |
| Tinuvin 1130[5] | 0.29 |
| Amyl acetate | 1.88 |
| | 100.00 |

[1]Surfactant from BASF Corp., 1419 Biddle, Wyandotte, Michigan 48192
[2]Synthetic bentonite clay from Laporte, Incorporated, Park 80 West, Plaza 11, Saddle Brook, NJ 07662.
[3]Melamine crosslinker from Monsanto Corporation, 800 North Lindbergh Boulevard, St. Louis, MO 63167.
[4]Degussa, Inc., Chemicals Division, 2 Penn Plaza New York, N.Y. 10001.
[5]UV light absorber from Ciba-Geigy Corp., 444 Saw Mill Rd. Ardsley, N.Y. 10502.

## Claims

1.    Use of a polyurethane resin in solvent-borne automotive coating compositions wherein the polyurethane resin comprises- a polyamide modified polyurethane resin comprising the reaction product of

    a)polyamide having a molecular weight ranging from 200 to 2,000 obtained by reacting

i)an organic compound selected from the group consisting of aromatic, aliphatic and cycloaliphatic anhydrides, diacid halides, and mixtures thereof with

ii) an amine containing compound selected from the group consisting of diamines, amino alcohols, amino thiols and mixtures thereof,

in a molar ratio of 1:1 to 1:2

b)polyol, and

c) diisocyanate functional monomer

wherein 6 to 25 percent by weight based on total resin weight polyamide, 30 to 50 percent by weight based on total resin weight polyol and 25 to 40 percent by weight based on total resin weight diisocyanate functional monomer are used.

2. Use according to claim 1 wherein the solvent-borne automotive coating composition is a basecoat or a clearcoat composition.

3. Use according to claim 1 and 2 wherein compound i) is selected from the group consisting of 1,2-cyclohexane dicarboxylic anhydride, succinic anhydride, terephtaloyl chloride, succinyl chloride and adipoyl chloride.

4. Use according to claims 1 to 3 wherein compound ii) is selected from the group consisting of ethanolamine, propanolamine, 2-amino-2-methyl-1-propanol, 2-amino ethanethiol, 1,4diaminocyclohexane and ethylene diamine.

5. Use according to claims 1 to 4 wherein compound b) is selected from the group consisting of aromatic and aliphatic diols and triols.

6. Use according to claims 1 to 5 wherein compound b) is selected from the group consisting of polyester polyol, polycarbonate polyol, acrylic resins, neopentyl glycol, trimethylolpropane, and mixtures therof.

7. Use according to claims 1 to 6 wherein compound c) is an aliphatic diisocyanate compount.

8. Use according to claims 1 to 7 wherein compount c) is selected from the group consisting of isophorone diisocyanate, 1,6-hexamethylene diisocyanate, 1,4-butylene diisocyanate, methylene bis (4- cyclohexyl) isocyanate and 2,4 toluente diisocyanate.

9. Use according to claims 1 to 8, wherein the polyamid modified polyurethan resin further compromises a compount selected from the group consisting of trifunctional monomers and amino alcohols for capping any isocyanate functionality remaining after reaction of the components a), b) and c).

10. Use according to claim 9 wherein the compount for capping remaining isocyanate is selected from the group consisting-of ethanolamine, diethanolamine, trimethylolpropane and ethylene glycol.

11. Solvent-borne automotive coating compositions comprising a polyamide modified polyurethane resin comprising the reaction product of

a) polyamide having a molecular weight ranging from 200 to 2,000 obtained by reacting

i) an organic compount selected from the group consisting of aromatic, aliphatic, and cycloaliphatic anhydrides, diacid halides, and mixtures thereof with

ii) an amine containing compound selected from the group consisting of diamines, amino alcohols, amino thiols and mixtures thereof,

in a molar ratio of 1:1 to 1:2

b) polyol, and

c)diisocyanante functional monomer

wherein 6 to 25 percent by weight based on total resin weight polyamide, 30 to 50 percent by weight based on total resin weight polyol and 25 to 40 percent by weight diisocyanate functionale monomer are used.

12. Coating compositions according to claim 11 wherein compound i) is selected from the group consisting of 1,2-cyclohexane dicarboxylic anhydride, phtalic anhydride , succinic anhydride, terephtaloyl chloride, succinyl chloride and adipoyl chloride.

13. Coating compositions according to claims 11 to 12 wherein compound ii) is selected from the group consisting of ethanolamine, propanolamine, 2-amino-2-methyl-I-propanol, 2-amino ethanethiol, 1,4-diaminocyclohexane and ethylene diamine.

14. Coating compositions according to claims 11 to 13 wherein compount b) is selected from the group consisting of aromatic and aliphatic diols and triols.

15. Coating compositions according to claims 11 to 14 wherein compound b) is selected from the group consisting of polyester polyol, polycarbonate polyol, acrylic resins, neopenthyl glycol, trimethylolpropane, and mixtures therof.

16. Coating composition according to claims 11 to 15 wherein compound c)is an aliphatic diisocyanate compound.

17. Coating compositions according to claims 11 to 16 wherein compund c) is selected from the group consisting of isophorone diisocyanate, 1,6-hexamethylene diisocianate, 1,4-butylene diisocyanate methylen bis (4-cyclohexyl) isocyanate and 2,4 toluene diisocyanate.

18. Coating compositions according to claims 11 to 17 wherein the polyamid modified polyurethan resin further comprises a compound selected from the group consisting of trifunctional monomeres and amino alcohols for capping any isocyanate functionality remaining after reaction of the components a), b) and c).

19. Coating composition according to claim 18 wherein the compound for capping remaining isocyanate is selected from the group consisting of ethanolamine, diethanolamine, trimethylolpropane and ethylene glycol.

**Patentansprüche**

1. Verwendung eines Polyurethanharzes in lösungsmittelhaltigen Automobillackzusammensetzungen, bei der es sich bei dem Polyurethanharz um ein polyamidmodifiziertes Polyurethanharz handelt, welches das Umsetzungsprodukt aus

   a) Polyamid mit einem Molekulargewicht im Bereich von 200 bis 2.000, erhalten durch Umsetzung

   i) einer organischen Verbindung aus der Gruppe bestehend aus aromatischen, aliphatischen und cycloaliphatischen Anhydriden, Disäurehalogeniden und deren Gemischen mit
   ii) einer aminogruppenhaltigen Verbindung aus der Gruppe bestehend aus Diaminen, Aminoalkoholen, Aminothiolen und deren Gemischen

   in einem Molverhältnis von 1:1 bis 1:2,
   b) Polyol und
   c) diisocyanatfunktionellem Monomer,

   wobei 6 bis 25 Gewichtsprozent Polyamid, bezogen auf das Harzgesamtgewicht, 30 bis 50 Gewichtsprozent Polyol, bezogen auf das Harzgesamtgewicht, und 25 bis 40 Gewichtsprozent diisocyanatfunktionelles Monomer, bezogen auf das Harzgesamtgewicht, eingesetzt werden, darstellt.

2. Verwendung nach Anspruch 1, bei der es sich bei der lösungsmittelhaltigen Automobillackzusammensetzung um eine Baislack- oder eine Klarlackzusammensetzung handelt.

3. Verwendung nach Anspruch 1 und 2, bei der die Verbindung i) aus der Gruppe bestehend aus 1,2-Cyclohexandicarbonsäureanhydrid, Bernsteinsäureanhydrid, Terephthaloylchlorid, Succinylchlorid und Adipoylchlorid stammt.

4. Verwendung nach den Ansprüchen 1 bis 3, bei der die Verbindung ii) aus der Gruppe bestehend aus Ethanolamin, Propanolamin, 2-Amino-2-methyl-1-propanol, 2-Aminoethanthiol, 1,4-Diaminocyclohexan und Ethylendiamin stammt.

5. Verwendung nach den Ansprüchen 1 bis 4, bei der die Verbindung b) aus der Gruppe bestehend aus aromatischen und aliphatischen Diolen und Triolen stammt.

6. Verwendung nach den Ansprüchen 1 bis 5, bei der die Verbindung b) aus der Gruppe bestehend aus Polyesterpolyol, Polycarbonatpolyol, Acrylharzen, Neopentylglykol, Trimethylolpropan und deren Gemischen stammt.

7. Verwendung nach den Ansprüchen 1 bis 6, bei der es sich bei der Verbindung c) um eine aliphatische Diisocyanatverbindung handelt.

8. Verwendung nach den Ansprüchen 1 bis 7, bei der die Verbindung c) aus der Gruppe bestehend aus Isophorondiisocyanat, 1,6-Hexamethylendiisocyanat, 1,4-Butylendiisocyanat, Methylenbis(4-cyclohexyl)isocyanat und 2,4-Toluoldiisocyanat stammt.

9. Verwendung nach den Ansprüchen 1 bis 8, bei der das polyamidmodifizierte Polyurethanharz außerdem auch noch eine Verbindung aus der Gruppe bestehend aus trifunktionellen Monomeren und Aminoalkoholen zur Verkappung jeglicher nach der Umsetzung der Komponenten a), b) und c) verbleibender Isocyanatfunktionalität enthält.

10. Verwendung nach Anspruch 9, bei der die Verbindung zur Verkappung von verbleibendem Isocyanat aus der Gruppe bestehend aus Ethanolamin, Diethanolamin, Trimethylolpropan und Ethylenglykol stammt.

11. Lösungsmittelhaltige Automobillackzusammensetzungen, enthaltend ein polyamidmodifiziertes Polyurethanharz, welches das Umsetzungsprodukt aus

a) Polyamid mit einem Molekulargewicht im Bereich von 200 bis 2.000, erhalten durch Umsetzung

i) einer organischen Verbindung aus der Gruppe bestehend aus aromatischen, aliphatischen und cycloaliphatischen Anhydriden, Disäurehalogeniden und deren Gemischen mit
ii) einer aminogruppenhaltigen Verbindung aus der Gruppe bestehend aus Diaminen, Aminoalkoholen, Aminothiolen und deren Gemischen

in einem Molverhältnis von 1:1 bis 1:2,
b) Polyol und
c) diisocyanatfunktionellem Monomer,

wobei 6 bis 25 Gewichtsprozent Polyamid, bezogen auf das Harzgesamtgewicht, 30 bis 50 Gewichtsprozent Polyol, bezogen auf das Harzgesamtgewicht, und 25 bis 40 Gewichtsprozent diisocyanatfunktionelles Monomer, bezogen auf das Harzgesamtgewicht, eingesetzt werden, darstellt.

12. Lackzusammensetzungen nach Anspruch 11, bei denen die Verbindung i) aus der Gruppe bestehend aus 1,2-Cyclohexandicarbonsäureanhydrid, Phthalsäureanhydrid, Bernsteinsäureanhydrid, Terephthaloylchlorid, Succinylchlorid und Adipoylchlorid stammt.

13. Lackzusammensetzungen nach den Ansprüchen 11 bis 12, bei denen die Verbindung ii) aus der Gruppe bestehend aus Ethanolamin, Propanolamin, 2-Amino-2-methyl-1-propanol, 2-Aminoethanthiol, 1,4-Diaminocyclohexan und Ethylendiamin stammt.

14. Lackzusammensetzungen nach den Ansprüchen 11 bis 13, bei denen die Verbindung b) aus der Gruppe bestehend aus aromatischen und aliphatischen Diolen und Triolen stammt.

15. Lackzusammensetzungen nach den Ansprüchen 11 bis 14, bei denen die Verbindung b) aus der Gruppe bestehend aus Polyesterpolyol, Polycarbonatpolyol, Acrylharzen, Neopentylglykol, Trimethylolpropan und deren Gemischen stammt.

16. Lackzusammensetzung nach den Ansprüchen 11 bis 15, bei der es sich bei der Verbindung c) um eine aliphatische Diisocyanatverbindung handelt.

17. Lackzusammensetzungen nach den Ansprüchen 11 bis 16, bei denen die Verbindung c) aus der Gruppe bestehend aus Isophorondiisocyanat, 1,6-Hexamethylendiisocyanat, 1,4-Butylendiisocyanat, Methylenbis(4-cyclohexyl)isocyanat und 2,4-Toluoldiisocyanat stammt.

18. Lackzusammensetzungen nach den Ansprüchen 11 bis 17, bei denen das polyamidmodifizierte Polyurethanharz außerdem auch noch eine Verbindung aus der Gruppe bestehend aus trifunktionellen Monomeren und Aminoalkoholen zur Verkappung jeglicher nach der Umsetzung der Komponenten a), b) und c) verbleibender Isocyanatfunktionalität enthält.

19. Lackzusammensetzung nach Anspruch 18, bei der die Verbindung zur Verkappung von verbleibendem Isocyanat aus der Gruppe bestehend aus Ethanolamin, Diethanolamin, Trimethylolpropan und Ethylenglykol stammt.

**Revendications**

1. Utilisation d'une résine de polyuréthanne dans des compositions de revêtement automobiles en phase solvant, où la résine de polyuréthanne comprend une résine de polyuréthanne modifiée par un polyamide, comprenant le produit de réaction de

    a) un polyamide ayant un poids moléculaire s'échelonnant de 200 à 2 000, obtenu en faisant réagir

        i) un composé organique choisi parmi le groupe constitué d'anhydrides aromatiques, aliphatiques et cycloaliphatiques, d'halogénures de diacides et de leurs mélanges, avec
        ii) un composé aminé choisi parmi le groupe constitué de diamines, d'amino-alcools, d'aminothiols et de leurs mélanges,

    en un rapport molaire de 1:1 à 1:2
    b) un polyol, et
    c) un monomère à fonction diisocyanate,

où on utilise 6 à 25 pour cent en poids de polyamide, par rapport au poids total de la résine, 30 à 50 pour cent en poids de polyol, par rapport au poids total de la résine et 25 à 40 pour cent en poids de monomère à fonction diisocyanate, par rapport au poids total de la résine.

2. Utilisation selon la revendication 1, où la composition de revêtement automobile en phase solvant est une composition de couche de fond ou de couche transparente.

3. Utilisation selon les revendications 1 et 2, où le composé i) est choisi parmi le groupe constitué de l'anhydride 1,2-cyclohexanedicarboxylique, de l'anhydride succinique, du chlorure de téréphtaloyle, du chlorure de succinyle et du chlorure d'adipoyle.

4. Utilisation selon les revendications 1 à 3, où le composé ii) est choisi parmi le groupe constitué de l'éthanolamine, de la propanolamine, du 2-amino-2-méthyl-1-propanol, du 2-amino-éthanethiol, du 1,4-diaminocyclohexane et de l'éthylènediamine.

5. Utilisation selon les revendications 1 à 4, où le composé b) est choisi parmi le groupe constitué de diols et de triols aromatiques et aliphatiques.

6. Utilisation selon les revendications 1 à 5, où le composé b) est choisi parmi le groupe constitué d'un polyesterpolyol, d'un polycarbonate-polyol, de résines acryliques, du néopentylglycol, du triméthylolpropane et de leurs mélanges.

7. Utilisation selon les revendications 1 à 6, où le composé c) est un composé diisocyanate aliphatique.

**8.** Utilisation selon les revendications 1 à 7, où le composé c) est choisi parmi le groupe constitué du diisocyanate d'isophorone, du diisocyanate de 1,6-hexaméthylène, du diisocyanate de 1,4-butylène, du méthylènebis(4-cyclohexyl)isocyanate et du diisocyanate de 2,4-toluène.

**9.** Utilisation selon les revendications 1 à 8, où la résine de polyuréthanne modifiée par un polyamide comprend en outre un composé choisi parmi le groupe constitué de monomères trifonctionnels et d'amino-alcools en vue du coiffage de toute fonctionnalité isocyanate restant après la réaction des composants a), b) et c).

**10.** Utilisation selon la revendication 9, où le composé destiné au coiffage de l'isocyanate restant est choisi parmi le groupe constitué de l'éthanol amine, de la diéthanolamine, du triméthylolpropane et de l'éthylèneglycol.

**11.** Compositions de revêtement automobiles en phase solvant, comprenant une résine de polyuréthanne modifiée par un polyamide comprenant le produit de réaction de

    a) un polyamide ayant un poids moléculaire s'échelonnant de 200 à 2 000, obtenu en faisant réagir

        i) un composé organique choisi parmi le groupe constitué d'anhydrides aromatiques, aliphatiques et cycloaliphatiques, d'halogénures de diacides et de leurs mélanges, avec
        ii) un composé aminé choisi parmi le groupe constitué de diamines, d'amino-alcools, d'aminothiols et de leurs mélanges,

    en un rapport molaire de 1:1 à 1:2
    b) un polyol, et
    c) un monomère à fonction diisocyanate,

où on utilise 6 à 25 pour cent en poids de polyamide, par rapport au poids total de la résine, 30 à 50 pour cent en poids de polyol, par rapport au poids total de la résine et 25 à 40 pour cent en poids de monomère à fonction diisocyanate.

**12.** Compositions de revêtement selon la revendication 11, dans lesquelles le composé i) est choisi parmi le groupe constitué de l'anhydride 1,2-cyclohexane dicarboxylique, de l'anhydride phtalique, de l'anhydride succinique, du chlorure de téréphtaloyle, du chlorure de succinyle et du chlorure d'adipoyle.

**13.** Compositions de revêtement selon les revendications 11 à 12, dans lesquelles le composé ii) est choisi parmi le groupe constitué de l'éthanolamine, de la propanolamine, du 2-amino-2-méthyl-1-propanol, du 2-amino-éthanethiol, du 1,4-diaminocyclohexane et de l'éthylènediamine.

**14.** Compositions de revêtement selon les revendications 11 à 13, dans lesquelles le composé b) est choisi parmi le groupe constitué de diols et de triols aromatiques et aliphatiques.

**15.** Compositions de revêtement selon les revendications 11 à 14, dans lesquelles le composé b) est choisi parmi le groupe constitué d'un polyesterpolyol, d'un polycarbonate-polyol, de résines acryliques, du néopentylglycol, du triméthylolpropane et de leurs mélanges.

**16.** Composition de revêtement selon les revendications 11 à 15, dans laquelle le composé c) est un composé diisocyanate aliphatique.

**17.** Compositions de revêtement selon les revendications 11 à 16, dans lesquelles le composé c) est choisi parmi le groupe constitué du diisocyanate d'isophorone, du diisocyanate de 1,6-hexaméthylène, du diisocyanate de 1,4-butylène, du méthylènebis (4-cyclohexyl) isocyanate et du diisocyanate de 2,4-toluène.

**18.** Compositions de revêtement selon les revendications 11 à 17, dans lesquelles la résine de polyuréthanne modifiée par un polyamide comprend en outre un composé choisi parmi le groupe constitué de monomères trifonctionnels et d'amino-alcools en vue du coiffage de toute fonctionnalité isocyanate restant après la réaction des composants a), b) et c).

**19.** Composition de revêtement selon la revendication 18, dans laquelle le composé destiné au coiffage de l'isocyanate restant est choisi parmi le groupe constitué de l'éthanolamine, de la diéthanolamine, du triméthylolpropane et de l'éthylèneglycol.